# EUROPEAN PATENT APPLICATION

(11) **EP 4 255 100 A1**
(43) Date of publication of application: **04.10.2023**
(21) Application number: 21905344.4
(22) Date of filing: 02.11.2021
(51) Int. Cl.: H04W 88/06, H04W 72/04, H04W 8/24

(54) **SERVICE RESPONSE METHOD AND APPARATUS, TERMINAL, AND STORAGE MEDIUM**

(30) Priority: 18.12.2020 CN 202011510030
(71) Applicant: GUANGDONG OPPO MOBILE TELECOMMUNICATIONS CORP., LTD., Dongguan, Guangdong 523860 (CN)
(72) Inventor: TONG, Lin, Dongguan, Guangdong 523860 (CN); SHI, Yongsheng, Palo Alto, CA 94303 (US); FU, Kui, Dongguan, Guangdong 523860 (CN); CHEN, Zhiying, Dongguan, Guangdong 523860 (CN)
(74) Representative: Grassi, Stefano
(86) International application number: PCT/CN2021/128274
(87) International publication number: WO 2022/127415

(57) **Abstract**

A service response method and apparatus, a terminal, and a storage medium, relating to the technical field of communications. The method is applied to a terminal equipped with at least two SIM cards, and the at least two SIM cards comprise a first SIM card and a second SIM card. The method comprises: when the second SIM card has a service need, releasing a target hardware resource occupied by the first SIM card, and allocating the target hardware resource to the second SIM card, wherein after the target hardware resource is released, at least one network connection between the first SIM card and at least one network device is kept connected (202); and responding to a service of the second SIM card by means of the target hardware resource, and responding to a service of the first SIM card by means of the remaining hardware resources (204). According to the solution provided in the embodiments of the present application, the problem that a service of a first SIM card is interrupted when a service of a second SIM card is responded to can be avoided, and the effect of simultaneously responding to services of the two SIM cards by using limited hardware resources is achieved.

## Description

The present disclosure claims priority to Chinese patent disclosure No. 202011510030.9, filed on December 18, 2020, entitled "SERVICE RESPONSE METHOD AND APPARATUS, TERMINAL, AND STORAGE MEDIUM", the entire content of the above-mentioned disclosure is hereby incorporated herein by reference.

### TECHNICAL FIELD

The present disclosure relates to the field of communication technologies, and more particular, to a service response method and apparatus, a terminal, and a storage medium.

### BACKGROUND

With the continuous development of terminal technologies, more and more mobile terminals support the function of dual subcarrier identification module (SIM) cards.

In the related art, the mobile terminals supporting the function of dual SIM cards usually adopt a dual SIM dual standby (DSDS) technology or a dual receiver-dual SIM dual standby (DR-DSDS) technology.

### SUMMARY

Embodiments of the present disclosure provide a service response method and apparatus, a terminal, and a storage medium. The technical solutions thereof are described as follows.

In one aspect, an embodiment of the present disclosure a service response method. The service respond method is applied to a terminal provided with at least two subcarrier identification module, SIM, cards, the at least two SIM cards include a first SIM card and a second SIM card, and the service response method includes: in response to the second SIM card having a service need, releasing a target hardware resource occupied by the first SIM card and allocating the target hardware resource to the second SIM card, where after the target hardware resource is released, at least one network connection between the first SIM card and at least one network device is kept connected; and responding to a service of the second SIM card by means of the target hardware resource, and responding to a service of the first SIM card by means of the remaining hardware resources.

In another aspect, an embodiment of the present disclosure provides a service response apparatus. The service response apparatus is applied to a terminal provided with at least two SIM cards, the at least two SIM cards include a first SIM card and a second SIM card, and the service response apparatus includes: a releasing and allocating module, configured to: in response to the second SIM card having a service need, release a target hardware resource occupied by the first SIM card and allocate the target hardware resource to the second SIM card, where after the target hardware resource is released, at least one network connection between the first SIM card and at least one network device is kept connected; and a service response module, configured to respond to a service of the second SIM card by means of the target hardware resource, and respond to a service of the first SIM card by means of the remaining hardware resources.

In still another aspect, an embodiment of the present disclosure provides a terminal. The terminal is provided with at least two SIM cards, the at least two SIM cards include a first SIM card and a second SIM card, and the terminal includes: a processor; a receiver and a transmitter connected to the processor; and a memory stored with executable instructions capable of being executed by the processor; where the processor is configured to load and execute the executable instructions to implement the service response method described above.

In yet still another aspect, an embodiment of the present disclosure provides a computer-readable storage medium stored with at least one instruction, where the at least one instruction is configured to be executed by a processor to implement the service response method described above.

In further still another aspect, an embodiment of the present disclosure provides a computer program product or computer program. The computer program product or computer program includes computer instructions stored in a computer-readable storage medium from which a processor of a terminal reads and executes the computer instructions to make the terminal to implement the service response method described above.

### BRIEF DESCRIPTION OF THE DRAWINGS

FIG. 1 illustrates a schematic view of an implementation environment according to embodiments of the present disclosure.
FIG. 2 illustrates a flowchart of a service response method according to an embodiment of the present disclosure.
FIG. 3 illustrates a flowchart of a service response method according to a first embodiment of the present disclosure.
FIG. 4 illustrates a schematic view of an implementation process of the service response method according to the first embodiment of the present disclosure.
FIG. 5 illustrates a schematic view of another implementation process of the service response method according to the first embodiment of the present disclosure.
FIG. 6 illustrates a schematic view of still another implementation process of the service response method according to the first embodiment of the present disclosure.
FIG. 7 illustrates a flowchart of a service response method according to a second embodiment of the present disclosure.
FIG. 8 illustrates a schematic view of an implementation process of the service response method according to the second embodiment of the present disclosure.
FIG. 9 illustrates a schematic view of another implementation process of the service response method according to the second embodiment of the present disclosure.
FIG. 10 illustrates a schematic diagram of still another implementation process of the service response method according to the second embodiment of the present disclosure.
FIG. 11 illustrates a flowchart of a service response method according to a third embodiment of the present disclosure.
FIG. 12 illustrates a schematic diagram of an implementation process of the service response method according to the third embodiment of the present disclosure.
FIG. 13 illustrates a structural block diagram of a service response apparatus according to an embodiment of the present disclosure.
FIG. 14 illustrates a structural block diagram of a terminal according to an embodiment of the present disclosure.

### DETAILED DESCRIPTION OF EMBODIMENTS

In order to make objectives, technical solutions, and advantages of the present disclosure more clear, embodiments of the present disclosure will be further described in detail with accompanying drawings.

In the present disclosure, the term "multiple" refers to two or more than two. The term "and/or" is used to describe the relationship of related objects, and means that there can be three kinds of relationships, in at least one embodiment, A and/or B may mean three conditions, i.e., A exists alone, A and B exist together, and B exists alone. The character "j" generally indicates that there is an OR relationship between context objects.

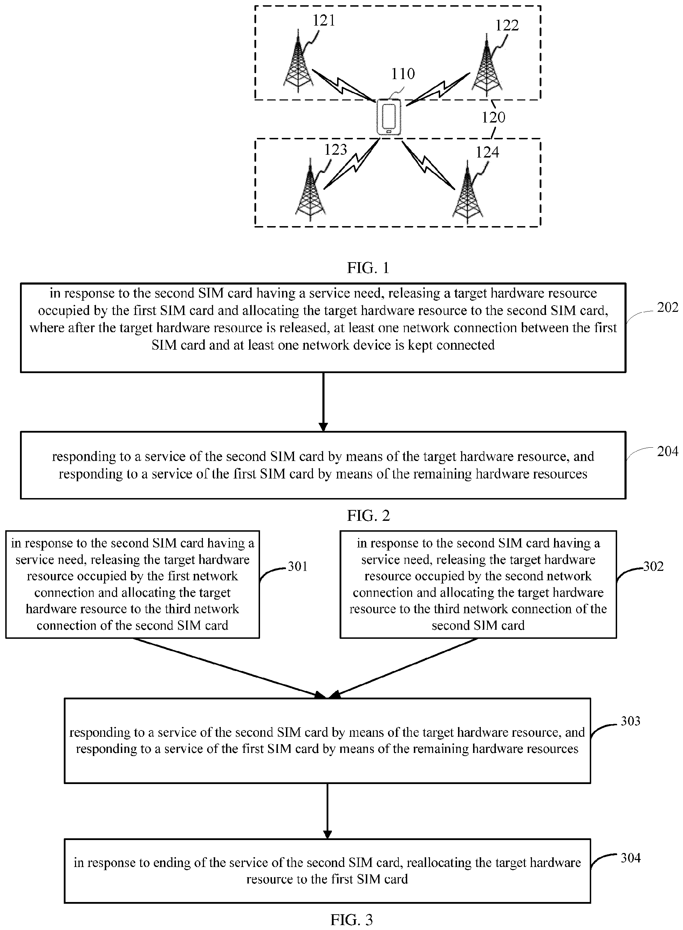

As illustrated in FIG. 1, FIG. 1 illustrates a schematic view of an implementation environment according to embodiments of the present disclosure, and the implementation environment includes a terminal 110 and a network device 120.

The terminal 110 may include a handheld device, a vehicle-mounted device, a wearable device, or a computing device with wireless communication functions, or other processing device connected to a wireless modem, as well as various forms of user equipment, such as a mobile station (MS), and a terminal device. For the convenience of description, the devices mentioned above are collectively referred to as terminals.

The network device 120 and the terminal 110 communicate with each other through a certain air interface technology, such as a Uu interface.

The network device 120 may be a base station, which is a device deployed in an access network to provide wireless communication functions for the terminal. The base station may be a macro base station, a micro base station, a relay station, an access point, or the like. In systems with different wireless access technologies, names of devices with base station functions may be different, in a long term evolution (LTE) system, the corresponding device is called an evolved Node B (shorted as eNodeB or eNB); and in a 5G new radio in unlicensed spectrum (NR-U) system, the corresponding device is called a gNodeB or gNB. With the evolution of communication technologies, the description of "base station" may change. For purpose of convenience, in the embodiments of the present disclosure, the above devices providing wireless communication functions for the terminal 110 are collectively referred to as network devices.

The technical solutions of the embodiments of the present disclosure can be applied to various communication systems, such as the LTE system, an LTE frequency division duplex (FDD) system, an LTE time division duplex (TDD) system, an advanced long-term evolution (LTE-A) system, a new radio (NR) system, an evolution system of NR system, an LTE-based access to unlicensed spectrum (LTE-U) system, the NR-U system, a next generation communication system, or other communication systems.

According to the number of a connected network device in a working state, a working mode of a SIM card in the terminal 110 can be divided into a single connection mode and a dual connection mode. In the single connection mode, the SIM card establishes a network connection with a single network device 120 through the terminal 110. As illustrated in FIG. 1, when a first SIM card works in the single connection mode, the terminal 110 establishes a network connection with a first network device 121; in the dual connection mode, the SIM card can establish two network connections with two network devices 120 through the terminal 110, as shown in FIG. 1, when the first SIM card works in the dual connection mode, the terminal 110 establishes a first network connection with the first network device 121 and establishes a second network connection with a second network device 122.

In an embodiment of the present disclosure, at least two SIM cards are set in the terminal 110, where working modes of different SIM cards may be the same or different. For example, a working mode of a first SIM card is the dual connection mode, and a working mode of a second SIM card is the single connection mode (in FIG. 1, when the working mode of the second SIM card is the single connection mode, the terminal 110 establishes a third network connection with a third network device 123); or, the working mode of the first SIM card is the dual connection mode, and the working mode of the second SIM card is the dual connection mode (in FIG. 1, when the working mode of the second SIM card is the dual connection mode, the terminal 110 establishes the third network connection with the third network device 123 and establishes a fourth network connection with a fourth network device 124); or, the working mode of the first SIM card is the single connection mode, and the working mode of the second SIM card is the single connection mode.

When there are two SIM cards in the terminal, the terminal adopts a dual SIM dual standby (DSDS) or dual receiver-dual SIM dual standby (DR-DSDS) technology to realize the dual-card function. However, due to the limited hardware resource for transceiving radio frequency signal of the terminal, no matter whether the DSDS technology or the DR-DSDS technology is used to realize the dual-card function, the terminal can only ensure that one SIM card is in the working state at a moment, that is to say, when the first SIM card responds to a service, if the second SIM card has a service need, responding to a service of the second SIM card will cause the service of the first SIM card to be interrupted. In an application scenario such as a game, the interruption of a service of a SIM card will increase a delay of the game and even cause the game to be dropped.

In the related art, the dual SIM cards can respond to the services at the same time by increasing the hardware resource for transceiving radio frequency signals. However, increasing hardware resource will not only greatly increase the cost of the terminal, but also cause an intermodulation problem when multiple transmitters work at the same time (for the SIM card in the dual connection mode, three or even four transmitters need to work at the same time).

In order to realize the simultaneous response of the services of the dual SIM cards without increasing additional hardware resource, an embodiment of the disclosure provides a service response method, which realizes the simultaneous response of the services of the dual SIM cards by reasonably releasing and allocating a hardware resource occupied by a SIM card and using the limited hardware resource. The following embodiments take the application of a service response method to the terminal 110 illustrated in FIG. 1 as an example.

An embodiment of the present disclosure provides a service response method, which is applied to a terminal provided with at least two SIM cards, where the at least two SIM cards include a first SIM card and a second SIM card, and the service response method includes:
in response to the second SIM card having a service need, releasing a target hardware resource occupied by the first SIM card and allocating the target hardware resource to the second SIM card, where after the target hardware resource is released, at least one network connection between the first SIM card and at least one network device is kept connected; and
responding to a service of the second SIM card by means of the target hardware resource, and responding to a service of the first SIM card by means of the remaining hardware resources.

In an illustrated embodiment, a working mode of the first SIM card is a dual connection mode, and a working mode of the second SIM card is a single connection mode; or, the working mode of the first SIM card is the dual connection mode, and the working mode of the second SIM card is the dual connection mode; or, the working mode of the first SIM card is the single connection mode, and the working mode of the second SIM card is the single connection mode.

In an illustrated embodiment, the working mode of the first SIM card is the dual connection mode, a first network connection is established between the first SIM card and a first network device, a second network connection is established between the first SIM card and a second network device, the working mode of the second SIM card is the single connection mode, and a third network connection is established between the second SIM card and a third network device;
the releasing a target hardware resource occupied by the first SIM card and allocating the target hardware resource to the second SIM card includes:
releasing the target hardware resource occupied by the first network connection and allocating the target hardware resource to the third network connection of the second SIM card; or,
releasing the target hardware resource occupied by the second network connection and allocating the target hardware resource to the third network connection of the second SIM card.

In an illustrated embodiment, the releasing the target hardware resource occupied by the first network connection and allocating the target hardware resource to the third network connection of the second SIM card includes:
releasing the target hardware resource occupied by the first network connection in a first release mode and allocating the target hardware resource to the third network connection of the second SIM card, where the target hardware resource is time-multiplexed by the first SIM card and the second SIM card in the first release mode; or,
releasing the target hardware resource occupied by the first network connection in a second release mode and allocating target hardware resource to the third network connection of the second SIM card, where the target hardware resource is monopolized by the second SIM card in the second release mode;
where the releasing the target hardware resource occupied by the second network connection and allocating the target hardware resource to the third network connection of the second SIM card includes:
   releasing the target hardware resource occupied by the second network connection in the first release mode and allocating target hardware resource to the third network connection of the second SIM card, where the target hardware resource is time-multiplexed by the first SIM card and the second SIM card in the first release mode; or,
   releasing the target hardware resource occupied by the second network connection in the second release mode and allocating the target hardware resource to the third network connection of the second SIM card, where the target hardware resource is monopolized by the second SIM card in the second release mode.

In an illustrated embodiment, the working mode of the first SIM card is the dual connection mode, and a first network connection is established between the first SIM card and a first network device, a second network connection is established between the first SIM card and a second network device, the working mode of the second SIM card is the dual connection mode, a third network connection is established between the second SIM card and a third network device, and a fourth network connection is established between the second SIM card and a fourth network device;
the releasing a target hardware resource occupied by the first SIM card and allocating the target hardware resource to the second SIM card includes:
releasing the target hardware resource occupied by the first network connection and the second network connection, and allocating the target hardware resource to the third network connection and the fourth network connection of the second SIM card, where after the target hardware resource is released, at least one of the first network connection and the second network connection is kept connected.

In an illustrated embodiment, the releasing the target hardware resource occupied by the first network connection and the second network connection, and allocating the target hardware resource to the third network connection and the fourth network connection of the second SIM card includes:
releasing the target hardware resource occupied by the first network connection and the second network connection in a first release mode and allocating the target hardware resource to the third network connection and the fourth network connection of the second SIM card, where the target hardware resource is time-multiplexed by the first SIM card and the second SIM card in the first release mode; or,
releasing a first target hardware resource occupied by the first network connection in the first release mode, releasing a second target hardware resource occupied by the second network connection in a second release mode, and allocating the first target hardware resource and the second target hardware resource to the third network connection and the fourth network connection of the second SIM card, where the first target hardware resource is time-multiplexed by the first SIM card and the second SIM card in the first release mode, and the second target hardware resource is monopolized by the second SIM card in the second release mode; or,
releasing the second target hardware resource occupied by the second network connection in the first release mode, releasing the first target hardware resource occupied by the first network connection in the second release mode, and allocating the first target hardware resource and the second target hardware resource to the third network connection and the fourth network connection of the second SIM card, where the second target hardware resource is time-multiplexed by the first SIM card and the second SIM card in the first release mode, and the first target hardware resource is monopolized by the second SIM card in the second release mode.

In an illustrated embodiment, during releasing the target hardware resource occupied by the first network connection and the second network connection in the first release mode, release durations of hardware resources occupied by the first network connection and the second network connection are staggered.

In an illustrated embodiment, the working mode of the first SIM card is the single connection mode, a first network connection is established between the first SIM card and a first network device, the working mode of the second SIM card is the single connection mode, and a second network connection is established between the second SIM card and a second network device;
the releasing a target hardware resource occupied by the first SIM card and allocating the target hardware resource to the second SIM card includes:
releasing the target hardware resource occupied by the first network connection and allocating the target hardware resource to the second network connection of the second SIM card, where after the hardware resource is released, the first network connection is kept connected.

In an illustrated embodiment, releasing the target hardware resource occupied by the first network connection and allocating the target hardware resource to the second network connection of the second SIM card includes:
releasing the target hardware resource occupied by the first network connection in a first release mode and allocating the target hardware resource to the second network connection of the second SIM card, where the target hardware resource is time-multiplexed by the first SIM card and the second SIM card in the first release mode.

In an illustrated embodiment, network connections established in the dual connection mode includes a new radio (NR) connection in a non-standalone (NSA) mode, and a long-term evolution (LTE) connection; and a network connection established in the single connection mode is the LTE connection or an NR connection in a standalone (SA) mode.

In an illustrated embodiment, the target hardware resource includes a transmitter resource and/or a receiver resource.

In an illustrated embodiment, after the responding to a service of the second SIM card by means of the target hardware resource, and responding to a service of the first SIM card by means of the remaining hardware resources, the method further includes:
in response to ending of the service of the second SIM card, reallocating the target hardware resource to the first SIM card.

As illustrated in FIG. 2, FIG. 2 illustrates a flowchart of a service response method according to an embodiment of the present disclosure. This embodiment is explained by taking the service response method being applied in the terminal 110 illustrated in FIG. 1 as an example, and the service response method may begin from block 202 to block 204.

At block 202, in response to a second SIM card having a service need, a target hardware resource occupied by a first SIM card is released and allocated to the second SIM card, where after the target hardware resource is released, at least one network connection between the first SIM card and at least one network device is kept connected.

In this embodiment, the terminal is provided with at least two SIM cards, and the following embodiment takes the first SIM card and the second SIM card of the at least two SIM cards as examples.

In an embodiment, the first SIM card is a main card, the second SIM card is an auxiliary card, and the terminal preferentially allocates a hardware resource to the first SIM card for service response.

In a process of the terminal responding to a service of the first SIM card through a hardware resource, when the second SIM card has a service need, the terminal determines the target hardware resource to be allocated to the second SIM card from the hardware resource occupied by the first SIM card, where the target hardware resource is part of the hardware resource occupied by the first SIM card, or all the hardware resource occupied by the first SIM card.

In order to ensure that the service of the first SIM card can be still responded normally after releasing the target hardware resource occupied by the first SIM card, and that a service of the second SIM card can be responded normally through the target hardware resource, the terminal determines the target hardware resource with a goal of keeping at least one network connection between the first SIM card and at least one network device connected (i.e., in a connected state) after releasing the target hardware resource, and a goal of the target hardware resource meeting a service response need of the second SIM card.

After the target hardware resource is released, the number of a network connection between the first SIM card and a network device being in the connected state is related to working modes of the first SIM card and the second SIM card. In an embodiment, the number of the network connection in the connected state is one (with a single network device) or two (with two network devices).

In an embodiment of the present disclosure, the target hardware resource includes a transmitter resource and a receiver resource, that is to say, the terminal allocates the transmitter resource and the receiver resource occupied by the first SIM card to the second SIM card, so that the second SIM card can transmit and receive radio frequency signals with the network device through the allocated transmitter resource and the allocated receiver resource, thereby realizing service response.

It should be noted that this embodiment takes an example that the terminal has no idle hardware resource after responding to the service of the first SIM card through the hardware resource (so the target hardware resource need to be released). In other possible application scenarios, when the terminal still has an idle hardware resource after responding to the service of the first SIM card through the hardware resource, the terminal can respond to the service of the second SIM card through the idle hardware resource, which is not limited in this embodiment.

At block 204, the service of the second SIM card is responded by means of the target hardware resource, and the service of the first SIM card is responded through the remaining hardware resources.

After the target hardware resource is released and allocated, the terminal responds to the service of the second SIM card through the target hardware resource; at the same time, after the target hardware resource is released, the remaining hardware resources occupied by the first SIM card can still make at least one network connection keep the connected state and thus the service of the first SIM card can continue to be responded, as such, the simultaneous response of the services of the first SIM card and the second SIM card can be realized.

In a possible application scenario, the terminal responds to a game service of the first SIM card through a hardware resource, when the second SIM card receives an incoming call, the terminal allocates a part of the hardware resource occupied by the first SIM card to the second SIM card, which realizes a normal response of a calling service of the second SIM card while ensuring a normal response of the game service of the first SIM card, that is, the user can continue to play game during calling.

In the embodiments of the present disclosure, for the terminal provided with the at least two SIM cards, if the second SIM card has a service need in a process of responding to the service of the first SIM card, the target hardware resource occupied by the first SIM card is allocated to the second SIM card on the premise of ensuring that there is at least one network connection between the first SIM card and the network device in the connected state, so that the service of the second SIM card is responded through the target hardware resource, the service of the first SIM card is still responded through the remaining hardware resources, which avoids the problem that the service of the first SIM card is interrupted due to the response to the service of the second SIM card, and achieves the effect of simultaneous response of the services of the dual SIM cards by using the limited hardware resource, and improves the stability of service response of a multi-SIM card terminal.

When determining the target hardware resource to be released and a release mode of the target hardware resource, the terminal needs to consider the respective working modes of the first SIM card and the second SIM card. In some embodiments, the working modes of the first SIM card and the second SIM card may include the following three aspects.
1. The working mode of the first SIM card is a dual connection mode, and the working mode of the second SIM card is a single connection mode.

In an embodiment, when the first SIM card operates in an eutra-new radio dual connectivity (EN-DC) mode, in the dual connection mode, network connections established by the first SIM card through the terminal include a new radio (NR) connection in a non-standalone (NSA) mode and a long-term evolution (LTE) connection, and an anchor point of the network connections is located in a LTE network.

A network connection established by the second SIM card through the terminal may be an NR connection in a standalone (SA) mode, or the LTE connection.

Accordingly, after the target hardware resource is released, the LTE connection corresponding to the first SIM card keeps the connected state, or both the NR connection and the LTE connection corresponding to the first SIM card keep the connected state; and after the target hardware resource is allocated, the NR connection corresponding to the second SIM card keeps the connected state, or the LTE connection corresponding to the second SIM card keeps the connected state.

2. The working mode of the first SIM card is the dual connection mode, and the working mode of the second SIM card is the dual connection mode.

In an embodiment, when both the first SIM card and the second SIM card work in the EN-DC mode, in the dual connection mode, the network connections established by the first SIM card through the terminal include the NR connection in the NSA mode and the LTE connection, and the network connections established by the second SIM card through the terminal include the NR connection in the NSA mode and the LTE connection, and anchor points of the network connections of the first SIM card and the second SIM card are all located in an LTE network.

Accordingly, after the target hardware resource is released, the LTE connection corresponding to the first SIM card keeps the connected state, or both the NR connection and the LTE connection corresponding to the first SIM card keep the connected state; and after the target hardware resource is allocated, the LTE connection corresponding to the second SIM card keeps the connected state, or both the NR connection and the LTE connection corresponding to the second SIM card keep the connected state.

3. The working mode of the first SIM card is the single connection mode, and the working mode of the second SIM card is the single connection mode.

In an embodiment, when both the first SIM card and the second SIM card are in the single connection mode, a network connection established by each of the first SIM card and the second SIM card through the terminal may be an NR connection in an SA mode or an LTE connection. In an embodiment, the network connection between the first SIM card and a network device is the NR connection, and the network connection between the second SIM card and a network device is the LTE connection.

Correspondingly, after the target hardware resource is released, the NR connection corresponding to the first SIM card keeps the connected state; and after the target hardware resource is allocated, the LTE connection corresponding to the second SIM card keeps the connected state.

A service response flow will be described in detail in combination with the above working modes of the SIM cards.

As illustrated in FIG. 3, FIG. 3 illustrates a flowchart of a service response method according to a first embodiment of the present disclosure. This embodiment takes the working mode of the first SIM card being the dual connection mode and the working mode of the second SIM card being the single connection mode as an example. The method may begin from block 301 to block 304.

At block 301, in response to the second SIM card having a service need, a target hardware resource occupied by a first network connection is released and allocated to a third network connection of the second SIM card.

When the terminal responds to the service of the first SIM card in the dual connection mode through a hardware resource, the first network connection between the terminal and the first network device keeps the connected state, and the second network connection between the terminal with the second network device keeps the connected state.

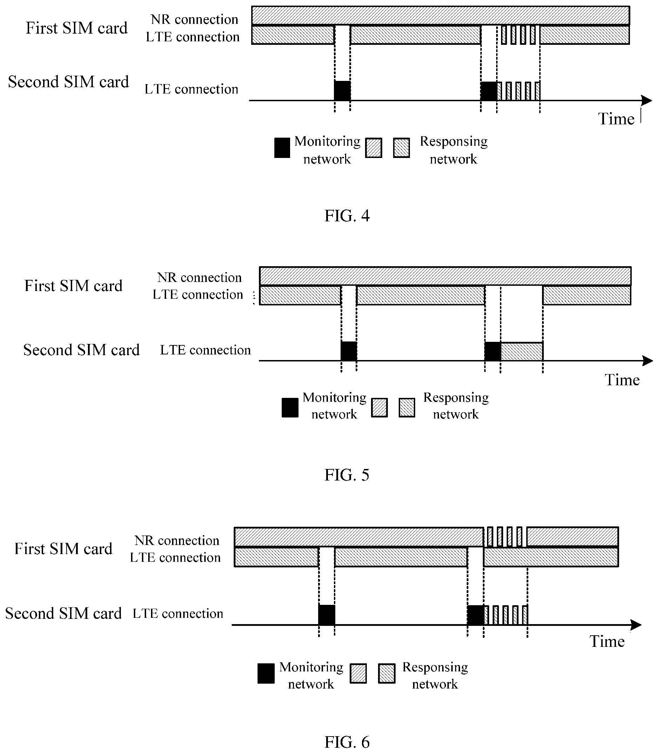

In an embodiment, as illustrated in FIG. 4, the terminal responds to a network through the NR connection and LTE connection of the first SIM card to meet the service need of the first SIM card.

In an embodiment, in a process of responding to the service of the first SIM card, the terminal will regularly release some hardware resource (such as receiver resource) to the second SIM card to receive a monitoring signal of the network. When the second SIM card does not need to respond to the network (that is, there is no service need), the some hardware resource will be returned by the second SIM card to the first SIM card after receiving the monitoring signal.

As illustrated in FIGS. 4, 5 and 6, when the terminal responds to the service of the first SIM card through the NR connection and the LTE connection, a part of the hardware resource occupied by the LTE connection are allocated to the LTE connection of the second SIM card, the second SIM card monitors the network through the part of the hardware resource, and returns the part of the hardware resource to the first SIM card when there is no network response need.

When the second SIM card needs to respond to the network (i.e., there is a service need), the second SIM card needs to continue to occupy the part of the hardware resource in order to perform service response through the part of the hardware resource. In an embodiment of the present disclosure, in order to ensure the normal service response of the first SIM card and the timely service response of the second SIM card, the terminal releases the target hardware resource occupied by the first network connection in the dual-network connection and allocates the target hardware resource to a third network connection between the second SIM card and a third network device.

In an embodiment, as illustrated in FIG. 4, the terminal may determine a hardware resource occupied by the LTE connection of the first SIM card as the target hardware resource and allocate the target hardware resource to the second SIM card.

In order to reduce the impact of responding to the service of the second SIM card on the service of the first SIM card, the terminal uses different release modes to release the target hardware resource, and two different release modes of the target hardware resource is described herein after.
1. The target hardware resource occupied by the first network connection is released in a first release mode and allocated to the third network connection of the second SIM card, where the target hardware resource is time-multiplexed by the first SIM card and the second SIM card in the first release mode.

In an embodiment, in the dual connection mode, when a network corresponding to the first network connection is used as an anchor point and the third network connection occupies the target hardware resource for a long time, the first network connection will be interrupted, and then the second network connection will be interrupted (dropped). Therefore, the terminal releases and allocates the target hardware resource by a time-multiplexing manner, so that the first network connection of the first SIM card and the third network connection of the second SIM card can alternately use the target hardware resource, and it can be guaranteed that the respective services of the first SIM card and the second SIM card can b be responded.

In an embodiment, a duration of time multiplexing can be preset in the terminal.

As illustrated in FIG. 4, the target hardware resource originally occupied by the LTE connection of the first SIM card is alternately used by the LTE connections of the first SIM card and the second SIM card, and the service of the second SIM card is responded. In this case, the NR connection and the LTE connection of the first SIM card are both kept in the connected state, so the service of the first SIM card can continue to be responded, and a response delay of the service is low because the NR connection is not affected.

2. The target hardware resource occupied by the first network connection is released in a second release mode and allocated to the third network connection of the second SIM card, where the target hardware resource is monopolized by the second SIM card in the second release mode.

In addition to using the manner of the target hardware resource being time-multiplexed by the first SIM card and the second SIM card, in order to simplify the release and allocation process of the hardware resource, the terminal can also control the second SIM card to monopolize the target hardware resource released by the first SIM card, that is to say, in the process of responding to the service of the second SIM card, the first network connection corresponding to the first SIM card will not be able to use the target hardware resource.

In an embodiment, as illustrated in FIG. 5, in the process of responding to the service of the second SIM card, the target hardware resource originally occupied by the LTE connection of the first SIM card is monopolized by the second SIM card, and the second SIM card perform service respond through the LTE connection; and at the same time, the NR connection of the first SIM card keeps the connected state, so the service of the first SIM card can continue to be responded.

It should be noted that when the network corresponding to the first network connection is the anchor point in the dual connection mode, if the second SIM card is in a service response state for a long time, the first network connection will be disconnected, which will lead to the disconnection of the second network connection. Therefore, in an embodiment, the terminal determines an expected response duration based on a service type of the service of the second SIM card, when the expected response time is greater than a duration threshold, the target hardware resource will be released using the first release mode, when the expected response duration is smaller than the duration threshold, the target hardware resources are released in the second release mode. In an embodiment, the expected response duration may be determined according to historical response durations of the service.

At block 302, in response to the second SIM card having a service need, the target hardware resource occupied by the second network connection is released and allocated to a third network connection of the second SIM card.

Because the first SIM card establishes two network connections with the network device in the dual connection mode, the terminal can release the target hardware resource occupied by the first network, and in another embodiment, the terminal can also release the target hardware resource occupied by the second network connection.

Similar to the above block 301, the terminal uses different modes to release the target hardware resource, and two different modes for releasing the target hardware resource are described below.
1. The target hardware resource occupied by the second network connection is released in the first release mode and allocated to the third network connection of the second SIM card, where the target hardware resource is time-multiplexed by the first SIM card and the second SIM card in the first release mode.

In an embodiment, in the dual connection mode, the second network connection is a connection mainly for transmitting data, and a data throughput of the second network connection can directly affect the service response quality. Therefore, in order to minimize the impact of the service of the second SIM card on the service of the first SIM card, the terminal releases and allocates the target hardware resource by a time-multiplexing manner, so that the second network connection of the first SIM card and the third network connection of the second SIM card can alternately use the target hardware resource, thereby ensures that the respective services of the first SIM card and the second SIM card can be responded, and reduces the influence of time-multiplexing of the hardware resource on the data throughput of the first SIM card.

As illustrated in FIG. 6, the target hardware resource originally occupied by the NR connection of the first SIM card is alternately used by the NR connection of the first SIM card and the LTE connection of the second SIM card, the service of the second SIM card is responded, at the same time, both the NR connection and the LTE connection of the first SIM card keep the connected state, so the service of the first SIM card can continue to be responded.

2. The target hardware resource occupied by the second network connection is released in the second release mode and allocated to the third network connection of the second SIM card, where the target hardware resource is monopolized by the second SIM card in the second release mode.

In addition to using the manner of the target hardware resource being time-multiplexed by the first SIM card and the second SIM card, in order to simplify the release and allocation process of the hardware resource, the terminal can also control the second SIM card to monopolize the target hardware resource released by the first SIM card, that is to say, in the process of responding to the service of the second SIM card, the first network connection corresponding to the first SIM card will not be able to use the target hardware resource.

In an embodiment, the target hardware resource originally occupied by the NR connection of the first SIM card is monopolized by the second SIM card, and the second SIM card responds to the service through the LTE connection; at the same time, the LTE connection of the first SIM card keeps the connected state, thus the service of the first SIM card can continue to be responded.

It should be noted that since the second SIM card monopolizing the hardware resource originally occupied by the second network connection will have a great impact on the data throughput of the first SIM card and increase the delay. Therefore, in an embodiment, the terminal determines a data throughput requirement and a delay requirement the service of the first SIM card, when the data throughput requirement and the delay requirement are lower than a preset demand index (that is, the data throughput is low and the delay requirement is low), the terminal releases the target hardware resource in the second release mode, otherwise, the terminal releases the target hardware resources in the first release mode.

At block step 303, the service of the second SIM card is responded through the target hardware resource, and the service of the first SIM card is responded through the remaining hardware resources.

As illustrated in FIG. 4, the terminal performs network response to the service of the second SIM card through the LTE connection, and perform network response to the service of the first SIM card through the LTE connection and the NR connection; as illustrated in FIG. 5, the terminal performs network response to the service of the second SIM card through the LTE connection, and performs network response to the service of the first SIM card through the NR connection; and as illustrated in FIG. 6, the terminal performs network response to the service of the second SIM card through the LTE connection, and performs network response to the service of the first SIM card through the LTE connection and the NR connection.

At block 304, in response to ending of the service of the second SIM card, the target hardware resource is reallocated to the first SIM card.

No matter which mode is used to release and allocate hardware resource, it will have a certain impact on the data throughput of the first SIM card, so when the service of the second SIM card ends, the terminal reallocates the target hardware resource occupied by the third network connection of the second SIM card to the first SIM card.

As illustrated in FIG. 4 or 5, when the service of the second SIM card ends, the terminal reallocates the target hardware resource occupied by the LTE connection of the second SIM card to the LTE connection of the first SIM card; as illustrated in FIG. 6, the terminal reallocates the target hardware resource occupied by the LTE connection of the second SIM card to the NR connection of the first SIM card.

It should be noted that in the embodiments illustrated in FIGS. 4, 5 and 6, the LTE connection between the second SIM card and the network device is taken as an example for schematic explanation. In other possible application scenarios, the NR connection (based on the SA) can also be established between the second SIM card and the network device, which is not limited in the embodiments.

In the embodiments, the terminal releases the target hardware resource occupied by one of the dual connections corresponding to the first SIM card, and controls the first SIM card and the second SIM card to use the target hardware resource alternately in a time-multiplexing manner, or controls the second SIM card to exclusively use the target hardware resource, which ensures that the service of the second SIM card is responded and the service of the first SIM card can continue to be responded, and thus realizes the simultaneous response of the services of the dual SIM cards. Further, using the time-multiplexing manner to release and allocate the hardware resource can further reduce the delay of the service of the first SIM card when responding to the service of the second SIM card and improve the service quality.

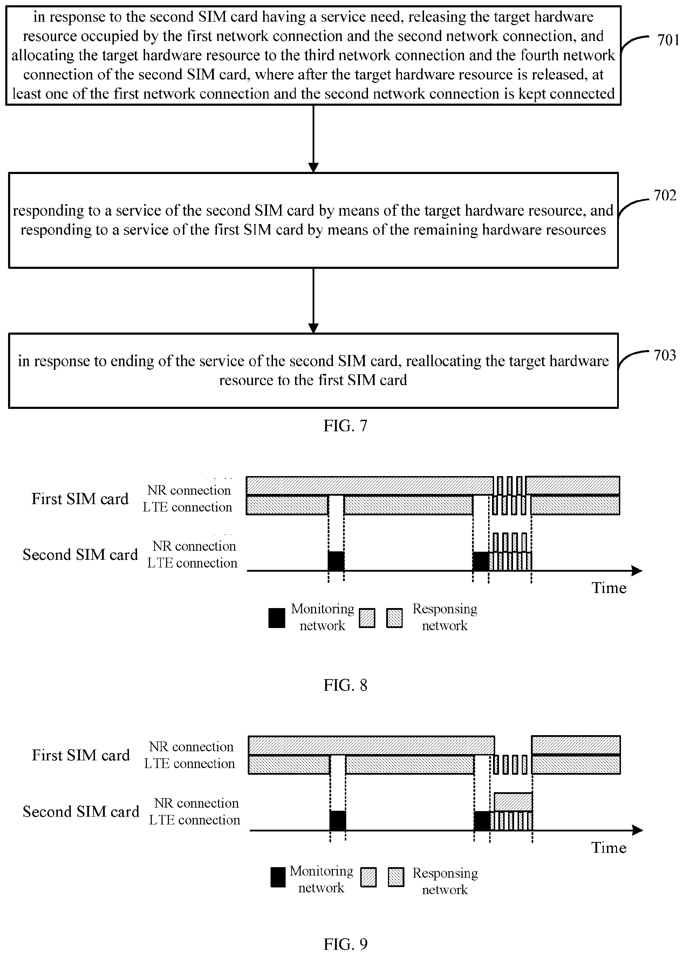

As illustrated in FIG. 7, FIG. 7 illustrates a flowchart of a service response method according to a second embodiment of the present disclosure. In this embodiment, the working mode of the first SIM card is dual connection mode, a first network connection is established between the first SIM card and the first network device, a second network connection is established between the first SIM card and the second network device, the working mode of the second SIM card is dual connection mode, a third network connection is established between the second SIM card and a third network device, and a fourth network connection is established between the second SIM card and a fourth network device. The method may begin from block 701 to block 703.

At block 701, in response to the second SIM card having a service need, the target hardware resource occupied by the first network connection and the second network connection is released and allocated to the third network connection and the fourth network connection of the second SIM card, where after the target hardware resource is released, at least one of the first network connection and the second network connection keeps a connected state.

**In** an embodiment, in the process of responding to the service of the first SIM card, the terminal will regularly release some hardware resource (such as receiver resource) to the second SIM card to receive the monitoring signal of the network. When the second SIM card does not need to respond to the network (that is, there is no service need), the some hardware resource will be returned to the first SIM card after the monitoring signal is received.

As illustrated in FIGS. 8, 9 and 10, when the terminal responds to the service of the first SIM card through the NR connection and the LTE connection, a part of the hardware resource occupied by the LTE connection is allocated to the LTE connection of the second SIM card, and the second SIM card monitors the network through the part of the hardware resource, and returns the part of the hardware resource to the first SIM card when there is no network response need.

When the second SIM card is required to respond to the network (i.e., there is a service need), the second SIM card is required to continue to occupy the hardware resource in order to respond to the service through the hardware resource. When the working modes of the first SIM card and the second SIM card are both dual-connection mode, only releasing the hardware resource occupied by one network connection corresponding to the first SIM card will not meet the requirements of the second SIM card, therefore, the terminal needs to release the target hardware resource occupied by the two network connections, and allocate the target hardware resource to the two network connections corresponding to the second SIM card.

Under different hardware resource release modes, in the process of responding to the service of the second SIM card, two network connections between the first SIM card and the network device can be kept in the connected state, or one network connection between the first SIM card and the network device can be kept in the connected state. The following describes different hardware resource release modes.
1. The first release mode is adopted to release the target hardware resource occupied by the first network connection and the second network connection and allocate the target hardware resource to the third network connection and the fourth network connection of the second SIM card, where the target hardware resource is time-multiplexed by the first SIM card and the second SIM card in the first release mode.

In order to minimize the impact of the service of the second SIM card on the service of the first SIM card, the terminal controls the first SIM card and the second SIM card to time-multiplex the hardware resource. In an embodiment, the terminal releases the first target hardware resource occupied by the first network connection in a time-multiplexing manner and allocates the first target hardware resource to the third network connection of the second SIM card; and releases the second target hardware resource occupied by the second network connection by the time-multiplexing manner and allocates the second target hardware resource to the fourth network connection of the second SIM card.

After the target hardware resource is allocated by the time-multiplexing manner, the first network connection and the second network connection corresponding to the first SIM card keep the connected state, and the third network connection and the fourth network connection corresponding to the second SIM card keep the connected state. Moreover, when both the first SIM card and the second SIM card use a certain network as a double connection anchor point, the time-multiplexing manner can ensure that the anchor point network is not interrupted and improve the stability of the services of the dual SIM cards.

In an embodiment, when the first release mode is adopted to release the target hardware resource occupied by the first network connection and the second network connection, release durations of the hardware resources occupied by the first network connection and the second network connection are staggered, that is, when the hardware resource occupied by the first network connection is released, the second network connection keeps the hardware resource occupied, and when the hardware resource occupied by the second network connection is released, the first network connection keeps the hardware resource occupied, which avoids the formation of network response gap due to the simultaneous release of hardware resources occupied by the first network connection and the second network connection.

As illustrated in FIG. 8, the LTE connection corresponding to the first SIM card and the LTE connection corresponding to the second SIM card alternately use the hardware resource in a time-multiplexing manner, and the NR connection corresponding to the first SIM card and the NR connection corresponding to the second SIM card alternately use the hardware resource in a time-multiplexing manner, so that the services of the first SIM card and the second SIM card can be normally responded.

2. The first target hardware resource occupied by the first network connection is released in the first release mode, the second target hardware resource occupied by the second network connection is released in the second release mode, and the first target hardware resource and the second target hardware resource are allocated to the third network connection and the fourth network connection of the second SIM card, where the first target hardware resource is time-multiplexed by the first SIM card and the second SIM card, and the second target hardware resource is monopolized by the second SIM card.

In an embodiment, when a priority (or importance) of the service of the second SIM card is higher than that of the service of first SIM card, in order to improve the data throughput when the second SIM card responds to the service, the terminal releases the first target hardware resource occupied by the first network connection by a time-multiplexing manner, and allocates the first target hardware resource to the third network connection of the second SIM card; release the second target hardware resource occupied by the second network connection, and control the fourth network connection of the second SIM card to monopolize the second target hardware resource. In an embodiment, the networks corresponding to the first network connection and the third network connection are anchor points in the dual connection mode.

**By** adopting the above-mentioned hardware resource release and allocation manner, the second SIM card responds to the service through the third network connection and the fourth network connection in the connected state, while the first SIM card continues to respond to the service through the first network connection in the connected state. Further, since the fourth network connection monopolizes the hardware resource originally occupied by the second network connection, the second SIM card can ensure a higher data throughput.

As illustrated in FIG. 9, the LTE connection corresponding to the first SIM card and the LTE connection corresponding to the second SIM card alternately use the hardware resource in a time-multiplexing manner, while the NR connection corresponding to the second SIM card monopolizes the hardware resource originally occupied by the NR connection of the first SIM card.

3. The second target hardware resource occupied by the second network connection is released in the first release mode, the first target hardware resource occupied by the first network connection is released in the second release mode, and the second target hardware resource and the first target hardware resource are allocated to the third network connection and the fourth network connection of the second SIM card, where the second target hardware resource is time-multiplexed by the first SIM card and the second SIM card, and the first target hardware resource is monopolized by the second SIM card in the second release mode.

Similar to the above-mentioned second mode, in an embodiment, the terminal releases the second target hardware resource occupied by the second network connection by a time-multiplexing manner, and allocates the second target hardware resource to the fourth network connection of the second SIM card, release the first target hardware resource occupied by the first network connection, and control the third network connection of the second SIM card to monopolize the second target hardware resource.

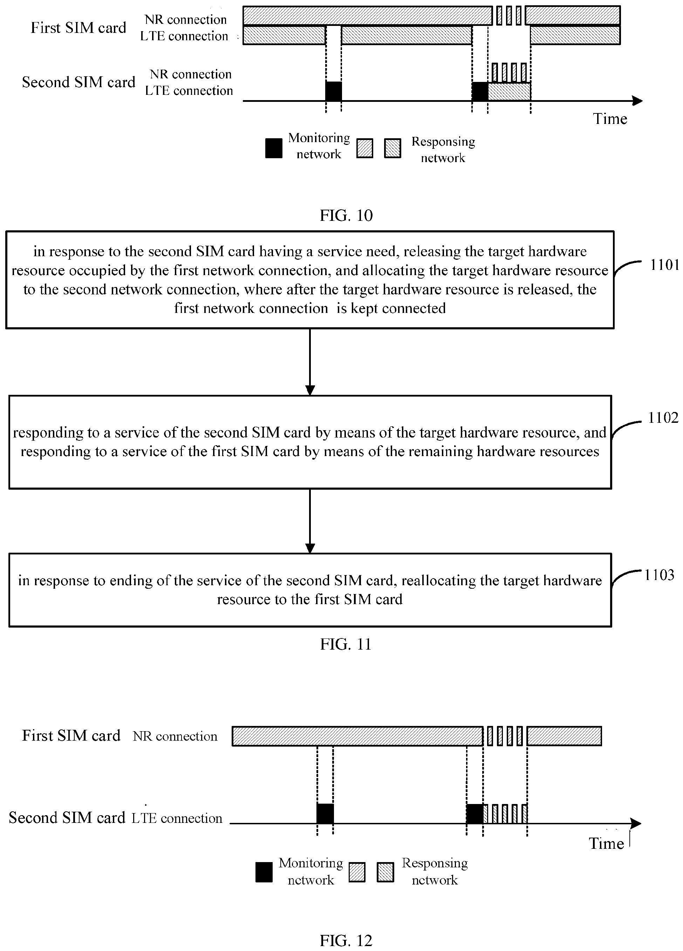

As illustrated in FIG. 10, the NR connection corresponding to the first SIM card and the NR connection corresponding to the second SIM card alternately use the hardware resource in a time-multiplexing manner, while the LTE connection corresponding to the second SIM card monopolizes the hardware resource originally occupied by the LTE connection of the first SIM card.

**It** should be noted that when networks corresponding to the first network connection and the third network connection are anchor points in the dual connection mode and the second SIM card is in the service response state for a long time, the first network connection will be disconnected, and then the second network connection will be disconnected. Therefore, in an embodiment, the terminal determines an expected response duration based on a service type of the service of the second SIM card, when the expected response duration is greater than a duration duration, the first release mode is adopted to release the first target hardware resource occupied by the first network connection, and when the expected response duration is smaller than the duration threshold, the second release mode is adopted to release the first target hardware resource occupied by the first network connection. In an embodiment, the expected response duration can be determined according to the historical response durations of the service.

At block 702, the service of the second SIM card is responded through the target hardware resource, and the service of the first SIM card is responded through the remaining hardware resources.

As illustrated in FIG. 8, the terminal performs network response to the service of the second SIM card through the LTE connection and the NR connection, and performs network response to the service of the first SIM card through the LTE connection and the NR connection; as illustrated in FIG. 9, the terminal performs network response to the service of the second SIM card through the LTE connection and the NR connection, and performs network response to the service of the first SIM card through the LTE connection; as illustrated in FIG. 10, the terminal performs network response to the service of the second SIM card through the LTE connection and the NR connection, and performs network response to the service of the first SIM card through the NR connection.

At block 703, in response to ending of the service of the second SIM card, the target hardware resource is reallocated to the first SIM card.

No matter which mode is used to release and allocate hardware resource, it will have a certain impact on the data throughput of the first SIM card, so when the service of the second SIM card ends, the terminal reallocates the target hardware resource occupied by the third network connection and the fourth network connection of the second SIM card to the first SIM card.

As illustrated in FIGS. 8, 9 and 10, when the service of the second SIM card ends, the terminal reallocates the target hardware resource occupied by the LTE connection and the NR connection of the second SIM card to the LTE connection and the NR connection of the first SIM card.

In this embodiment, the terminal releases the target hardware resource occupied by two network connections in the dual connection of the first SIM card, and controls the first SIM card and the second SIM card to alternately use the target hardware resource in a time-multiplexing manner, which ensures that while the service of the second SIM card is responded, the service of the first SIM card can be continuously responded, and thus realizes the simultaneous response of services of the dual SIM cards and reduces the delay caused by the service of the second SIM card to the service of the first SIM card.

As illustrated in FIG. 11, FIG. 11 illustrates a flowchart of a service response method according to a third embodiment of the present disclosure. This embodiment is explained with an example that the working mode of the first SIM card is the single connection mode, a first network connection is established between the first SIM card and a first network device, the working mode of the second SIM card is the single connection mode, and a second network connection is established between the second SIM card and the second network device. The method may begin from block 1101 to block 1103.

At block 1101, in response to the second SIM card having a service need, the target hardware resource occupied by the first network connection are released and allocated to the second network connection of the second SIM card, where after the target hardware resource is released, the first network connection keeps the connected state.

In an embodiment, for a terminal with a single transmitter and dual receivers, the second SIM card will regularly receive a monitoring signal of a network when the terminal responds to the service of the first SIM card. When the second SIM card does not need to respond to the network (that is, there is no service need), it will stand by after completing the monitoring action.

As illustrated in FIG. 12, when the terminal responds to the service of the first SIM card through the NR connection, the second SIM card can regularly monitor the network (through another receiver) without using the hardware resource of the first SIM card, and stand by again when there is no network response need.

In an embodiment, for a terminal with a single transmitter and a single receiver, in the process of responding to the service of the first SIM card, the terminal will regularly release a receiver resource to the second SIM card to receive a monitoring signal of a network, that is, the second SIM card occupies the hardware resource of the first SIM card for network monitoring. When the second SIM card does not need to respond to the network (that is, there is no service need), the receiver resource is returned to the first SIM card after the monitoring signal is received.

When the second SIM card needs to respond to the network (that is, there is a service need), the terminal is required to allocate the target hardware resource (transmitter resource) of the first SIM card to the second SIM card in order to respond to the service of the second SIM card.

Because the first SIM card only corresponds to one network connection, the terminal cannot control the first SIM card or the second SIM card to monopolize the hardware resource when services of the first SIM card and the second SIM card are required to be responded at the same time. In an embodiment of the present disclosure, the terminal releases the target hardware resource occupied by the first network connection in a time-multiplexing manner and allocates the target hardware resource to the second network connection of the second SIM card, so that the target hardware resource is used alternately by the first SIM card and the second SIM card.

In an embodiment, for a terminal with a single transmitter and dual receivers, the terminal releases a transmitter resource occupied by the first network connection in a time-multiplexing manner and allocates the transmitter resource to the second network connection of the second SIM card.

As illustrated in FIG. 12, when the second SIM card has a service need, the terminal adopts a time-multiplexing manner to control the first SIM card and the second SIM card to alternately use the transmitter resource for network response.

In an embodiment, for a terminal with a single transmitter and a single receiver, the terminal releases the transmitter resource and the receiver resource occupied by the first network connection in a time-multiplexing manner and allocates the transmitter resource and the receiver resource to the second network connection of the second SIM card.

At block 1102, the service of the second SIM card is responded through the target hardware resource, and the service of the first SIM card is responded through the remaining hardware resources. In an embodiment, as illustrated in FIG. 12, the terminal performs network response to the service of the second SIM card through the NR connection or the LTE connection, and performs network response to the service of the first SIM card through the NR connection or the LTE connection. In an embodiment, the terminal performs network response to the service of the second SIM card through the LTE connection and performs network response to the service of the first SIM card through the NR connection.

At block 1103, in response to ending of the service of the second SIM card, the target hardware resource is reallocated to the first SIM card.

As illustrated in FIG. 12, when the service of the second SIM card ends, the terminal reallocates the target hardware resource occupied by the LTE connection of the second SIM card to the NR connection of the first SIM card, which improves the data throughput of the first SIM card.

In the embodiment, the terminal uses the time-multiplexing manner to control the first SIM card and the second SIM card to alternately use the target hardware resource, so as to realize the simultaneous response of the services of the first SIM card and the second SIM card. Moreover, by adopting this solution, the services of the dual SIM cards can be responded at the same time only by setting a single transmitter in the terminal, which reduces a hardware requirement of the terminal and reduces the restriction on RF combination of the first SIM card and the second SIM card (when the two transmitters work at the same time, the number of the RF combination supported by the first SIM card and the second SIM card is limited by a RF chip and a RF front-end circuit).

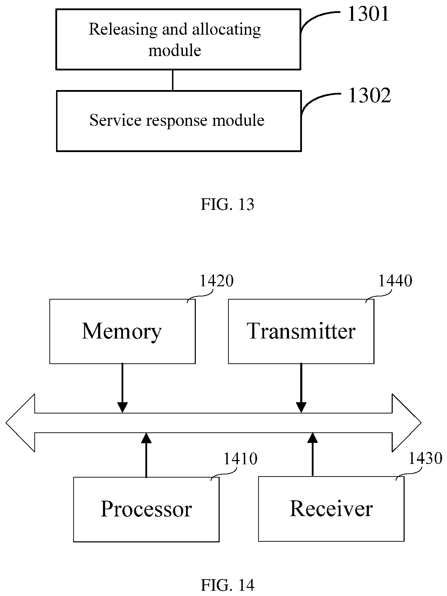

As illustrated in FIG. 13, FIG. 13 illustrates a structural block view of a service response device according to an embodiment of the present disclosure. The service response device can be realized as a whole or a part of a terminal through software, hardware or a combination thereof. The service response device includes:
a releasing and allocating module 1301, configured to: in response to the second SIM card having a service need, release a target hardware resource occupied by the first SIM card and allocate the target hardware resource to the second SIM card, where after the target hardware resource is released, at least one network connection between the first SIM card and at least one network device is kept connected; and
a service response module 1302, configured to respond to a service of the second SIM card by means of the target hardware resource, and respond to a service of the first SIM card by means of the remaining hardware resources.

In an embodiment, a working mode of the first SIM card is a dual connection mode, and a working mode of the second SIM card is a single connection mode; or, the working mode of the first SIM card is the dual connection mode, and the working mode of the second SIM card is the dual connection mode; or, the working mode of the first SIM card is the single connection mode, and the working mode of the second SIM card is the single connection mode.

In an embodiment, the working mode of the first SIM card is the dual connection mode, a first network connection is established between the first SIM card and a first network device, a second network connection is established between the first SIM card and a second network device, the working mode of the second SIM card is the single connection mode, and a third network connection is established between the second SIM card and a third network device;
the releasing and allocating module 1301 includes:
a first releasing and allocating unit, configured to release the target hardware resource occupied by the first network connection and allocate the target hardware resource to the third network connection of the second SIM card; or,
a second releasing and allocating unit, configured to release the target hardware resource occupied by the second network connection and allocate the target hardware resource to the third network connection of the second SIM card.

In an embodiment, the first releasing and allocating unit is configured to:
release the target hardware resource occupied by the first network connection in a first release mode and allocate the target hardware resource to the third network connection of the second SIM card, wherein the target hardware resource is time-multiplexed by the first SIM card and the second SIM card in the first release mode; or,
release the target hardware resource occupied by the first network connection in a second release mode and allocate target hardware resource to the third network connection of the second SIM card, wherein the target hardware resource is monopolized by the second SIM card in the second release mode;
the second releasing and allocating unit is configured to:
   release the target hardware resource occupied by the second network connection in the first release mode and allocate target hardware resource to the third network connection of the second SIM card, wherein the target hardware resource is time-multiplexed by the first SIM card and the second SIM card in the first release mode; or,
   release the target hardware resource occupied by the second network connection in the second release mode and allocate the target hardware resource to the third network connection of the second SIM card, wherein the target hardware resource is monopolized by the second SIM card in the second release mode.

In an embodiment, the working mode of the first SIM card is the dual connection mode, and a first network connection is established between the first SIM card and a first network device, and a second network connection is established between the first SIM card and a second network device, the working mode of the second SIM card is the dual connection mode, and a third network connection is established between the second SIM card and a third network device, and a fourth network connection is established between the second SIM card and a fourth network device;
the releasing and allocating module 1301 includes:
a third releasing and allocating unit, configured to release the target hardware resource occupied by the first network connection and the second network connection, and allocate target hardware resource to the third network connection and the fourth network connection of the second SIM card, wherein after the target hardware resource is released, at least one of the first network connection and the second network connection is kept connected.

In an embodiment, the third releasing and allocating unit is configured to:
release the target hardware resource occupied by the first network connection and the second network connection in a first release mode and allocate the target hardware resource to the third network connection and the fourth network connection of the second SIM card, wherein the target hardware resource is time-multiplexed by the first SIM card and the second SIM card in the first release mode; or,
release a first target hardware resource occupied by the first network connection in the first release mode, release a second target hardware resource occupied by the second network connection in a second release mode, and allocate the first target hardware resource and the second target hardware resource to the third network connection and the fourth network connection of the second SIM card, wherein the first target hardware resource is time-multiplexed by the first SIM card and the second SIM card in the first release mode, and the second target hardware resource is monopolized by the second SIM card in the second release mode; or,
release the second target hardware resource occupied by the second network connection in the first release mode, release the first target hardware resource occupied by the first network connection in the second release mode, and allocate the first target hardware resource and the second target hardware resource to the third network connection and the fourth network connection of the second SIM card, wherein the second target hardware resource is time-multiplexed by the first SIM card and the second SIM card in the first release mode, and the first target hardware resource is monopolized by the second SIM card in the second release mode.

In an embodiment, during releasing the target hardware resource occupied by the first network connection and the second network connection in a first release mode, release durations of hardware resources occupied by the first network connection and the second network connection are staggered.

In an embodiment, the working mode of the first SIM card is the single connection mode, and a first network connection is established between the first SIM card and a first network device, and the working mode of the second SIM card is the single connection mode, and a second network connection is established between the second SIM card and a second network device;
the releasing and allocating module 1301 includes:
a fourth releasing and allocating unit, configured to release the target hardware resource occupied by the first network connection and allocate the target hardware resource to the second network connection of the second SIM card, wherein after the hardware resource is released, the first network connection is kept connected.

In an embodiment, the fourth releasing and allocating unit is configured to:
release the target hardware resource occupied by the first network connection in a first release mode and allocate the target hardware resource to the second network connection of the second SIM card, wherein the target hardware resource is time-multiplexed by the first SIM card and the second SIM card in the first release mode.

In an embodiment, network connections established in the dual connection mode includes a new radio (NR) connection in a non-standalone (NSA) mode and a long-term evolution (LTE) connection; a network connection established in the single connection mode is the LTE connection or an NR connection in a standalone (SA) mode.

In an embodiment, the target hardware resource includes a transmitter resource and/or a receiver resource.

In an embodiment, the releasing and allocating module 1301 is further configured to: in response to ending of the service of the second SIM card, reallocating the target hardware resource to the first SIM card.

In summary, in the embodiments of the present disclosure, for the terminal provided with the at least two SIM cards, if the second SIM card has a service need in a process of responding to the service of the first SIM card, the target hardware resource occupied by the first SIM card is allocated to the second SIM card on the premise of ensuring that there is at least one network connection between the first SIM card and the network device in the connected state, so that the service of the second SIM card is responded through the target hardware resource, the service of the first SIM card is still responded through the remaining hardware resources, which avoids the problem that the service of the first SIM card is interrupted due to the response to the service of the second SIM card, and achieves the effect of simultaneous response of services of the dual SIM cards by using the limited hardware resource, and improves the stability of service response of a multi-SIM card terminal.

It should be noted that the device provided in the above embodiments is only illustrated by the division of the above functional modules. In practical application, the above functions can be completed by different functional modules as required, that is, an internal structure of the device is divided into different functional modules to complete all or part of the above functions. In addition, the devices provided in the above embodiments belong to the same concept as the method embodiments, and the specific implementation process can be found in the method embodiments, which is not repeated herein.

As illustrated in FIG. 14, FIG. 14 illustrates a structural block diagram of a terminal according to an embodiment of the present disclosure. It can be realized as the terminal in the above embodiments, and the terminal in the present disclosure can include one or more of the following components: a processor 1410, a memory 1420, a receiver 1430, and a transmitter 1440.

The processor 1410 may include one or more processing cores. The processor 1410 uses various interfaces and lines to connect various parts in the whole electronic device, and executes various functions of the electronic device and processes data by running or executing instructions, programs, code sets or instruction sets stored in the memory 1420 and calling data stored in the memory 1420. In an embodiment, the processor 1410 may be implemented in at least one hardware form of digital signal processing (DSP), field-programmable gate array (FPGA) and programmable logic array (PLA). The processor 1410 may be integrated with one or more combinations of a central processing unit (CPU), a graphics processing unit (GPU), a neural-network processing unit (NPU) and a modem. Specifically, the CPU mainly deals with an operating system, a user interface and application programs. The GPU is configured to render and draw contents that need to be displayed on a touch screen; the NPU is configured to realize artificial intelligence (AI) function; the modem is configured to handle wireless communication. It can be understood that the above modem can also be realized by a single chip without being integrated into the processor 1410.

The memory 1420 may include a random access memory (RAM) or a read-only memory (ROM). In an embodiment, the memory 1420 includes a non-transitory computer-readable storage medium. The memory 1420 may be configured to store instructions, programs, codes, code sets, or instruction sets. The memory 1420 may include a storage program area and a storage data area, where the storage program area may store instructions for implementing an operating system, instructions for at least one function (such as a touch function, a sound playing function, and an image playing function), and instructions for implementing various method embodiments described below; and the data storage area can store data (such as audio data, and a phone book) created according to the use of the terminal equipment.

The receiver 1430 and the transmitter 1440 can be realized as a communication component, which can be a communication chip. Moreover, the number of any one of the receiver 1430 and the transmitter 1440 in the terminal is at least one. For example, the terminal includes one transmitter and two receivers, or one transmitter and one receiver, or two transmitters and two receivers.

In addition, those skilled in the art can understand that the structure of the terminal illustrated above does not constitute a limitation on the terminal, and the terminal may include more or less components than those illustrated above, or combine some components, or have different component arrangements. For example, the terminal further includes an input unit, a sensor, an audio circuit, a speaker, a microphone, a power supply, and other components, which will not be described herein.

An embodiment of the present disclosure provides a computer-readable storage medium, which stores at least one instruction, and at least one instruction is configured to be executed by a processor to implement the service response method as described in the above embodiments.

An embodiment of the present disclosure provides a computer program product or a computer program including computer instructions stored in a computer-readable storage medium. A processor of a terminal is configured to read the computer instructions from the computer-readable storage medium, and execute the computer instructions to make the terminal implement the service response method as described in the above embodiments.

Those skilled in the art should realize that in one or more of the above embodiments, the functions described in the embodiments of the present application can be realized by hardware, software, firmware or any combination thereof. When implemented in software, these functions can be stored in a computer-readable medium or transmitted as one or more instructions or codes on the computer-readable medium. The computer-readable medium includes a computer storage medium and a communication medium, where the communication medium includes any medium that facilitates the transfer of computer programs from one place to another. The computer storage medium can be any available medium that can be accessed by a general-purpose or special-purpose computer.

The above is merely an optional embodiment of the present disclosure, and it is not used to limit the present disclosure. Any modification, equivalent substitution, and improvement made within the spirit and principle of the present disclosure should be included in the scope of protection of the present disclosure.

## Claims

1. A service response method, applied to a terminal provided with at least two subcarrier identification module, SIM, cards, the at least two SIM cards comprising a first SIM card and a second SIM card, and the service response method comprising:
in response to the second SIM card having a service need, releasing a target hardware resource occupied by the first SIM card and allocating the target hardware resource to the second SIM card, wherein after the target hardware resource is released, at least one network connection between the first SIM card and at least one network device is kept connected; and
responding to a service of the second SIM card by means of the target hardware resource, and responding to a service of the first SIM card by means of the remaining hardware resources.

2. The method according to claim 1, wherein a working mode of the first SIM card is a dual connection mode, and a working mode of the second SIM card is a single connection mode; or,
the working mode of the first SIM card is the dual connection mode, and the working mode of the second SIM card is the dual connection mode; or,
the working mode of the first SIM card is the single connection mode, and the working mode of the second SIM card is the single connection mode.

3. The method according to claim 2, wherein the working mode of the first SIM card is the dual connection mode, a first network connection is established between the first SIM card and a first network device, a second network connection is established between the first SIM card and a second network device, the working mode of the second SIM card is the single connection mode, and a third network connection is established between the second SIM card and a third network device;
the releasing a target hardware resource occupied by the first SIM card and allocating the target hardware resource to the second SIM card comprises:
releasing the target hardware resource occupied by the first network connection and allocating the target hardware resource to the third network connection of the second SIM card; or,
releasing the target hardware resource occupied by the second network connection and allocating the target hardware resource to the third network connection of the second SIM card.

4. The method according to claim 3, wherein the releasing the target hardware resource occupied by the first network connection and allocating the target hardware resource to the third network connection of the second SIM card comprises:
releasing the target hardware resource occupied by the first network connection in a first release mode and allocating the target hardware resource to the third network connection of the second SIM card, wherein the target hardware resource is time-multiplexed by the first SIM card and the second SIM card in the first release mode; or,
releasing the target hardware resource occupied by the first network connection in a second release mode and allocating target hardware resource to the third network connection of the second SIM card, wherein the target hardware resource is monopolized by the second SIM card in the second release mode;
wherein the releasing the target hardware resource occupied by the second network connection and allocating the target hardware resource to the third network connection of the second SIM card comprises:
releasing the target hardware resource occupied by the second network connection in the first release mode and allocating target hardware resource to the third network connection of the second SIM card, wherein the target hardware resource is time-multiplexed by the first SIM card and the second SIM card in the first release mode; or,
releasing the target hardware resource occupied by the second network connection in the second release mode and allocating the target hardware resource to the third network connection of the second SIM card, wherein the target hardware resource is monopolized by the second SIM card in the second release mode.

5. The method according to claim 2, wherein the working mode of the first SIM card is the dual connection mode, a first network connection is established between the first SIM card and a first network device, a second network connection is established between the first SIM card and a second network device, the working mode of the second SIM card is the dual connection mode, a third network connection is established between the second SIM card and a third network device, and a fourth network connection is established between the second SIM card and a fourth network device;
the releasing a target hardware resource occupied by the first SIM card and allocating the target hardware resource to the second SIM card comprises:
releasing the target hardware resource occupied by the first network connection and the second network connection, and allocating target hardware resource to the third network connection and the fourth network connection of the second SIM card, wherein after the target hardware resource is released, at least one of the first network connection and the second network connection is kept connected.

6. The method according to claim 5, wherein the releasing the target hardware resource occupied by the first network connection and the second network connection, and allocating target hardware resource to the third network connection and the fourth network connection of the second SIM card comprises:
releasing the target hardware resource occupied by the first network connection and the second network connection in a first release mode and allocating the target hardware resource to the third network connection and the fourth network connection of the second SIM card, wherein the target hardware resource is time-multiplexed by the first SIM card and the second SIM card in the first release mode; or,
releasing a first target hardware resource occupied by the first network connection in the first release mode, releasing a second target hardware resource occupied by the second network connection in a second release mode, and allocating the first target hardware resource and the second target hardware resource to the third network connection and the fourth network connection of the second SIM card, wherein the first target hardware resource is time-multiplexed by the first SIM card and the second SIM card in the first release mode, and the second target hardware resource is monopolized by the second SIM card in the second release mode; or,
releasing the second target hardware resource occupied by the second network connection in the first release mode, releasing the first target hardware resource occupied by the first network connection in the second release mode, and allocating the first target hardware resource and the second target hardware resource to the third network connection and the fourth network connection of the second SIM card, wherein the second target hardware resource is time-multiplexed by the first SIM card and the second SIM card in the first release mode, and the first target hardware resource is monopolized by the second SIM card in the second release mode.

7. The method according to claim 6, wherein during releasing the target hardware resource occupied by the first network connection and the second network connection in the first release mode, release durations of hardware resources occupied by the first network connection and the second network connection are staggered.

8. The method according to claim 2, wherein the working mode of the first SIM card is the single connection mode, a first network connection is established between the first SIM card and a first network device, the working mode of the second SIM card is the single connection mode, and a second network connection is established between the second SIM card and a second network device;
the releasing a target hardware resource occupied by the first SIM card and allocating the target hardware resource to the second SIM card comprises:
releasing the target hardware resource occupied by the first network connection and allocating the target hardware resource to the second network connection of the second SIM card, wherein after the hardware resource is released, the first network connection is kept connected.

9. The method according to claim 8, wherein releasing the target hardware resource occupied by the first network connection and allocating the target hardware resource to the second network connection of the second SIM card comprises:
releasing the target hardware resource occupied by the first network connection in a first release mode and allocating the target hardware resource to the second network connection of the second SIM card, wherein the target hardware resource is time-multiplexed by the first SIM card and the second SIM card in the first release mode.

10. The method according to any one of claims 2-9, wherein network connections established in the dual connection mode comprise a new radio, NR, connection in a non-standalone, NSA, mode, and a long-term evolution, LTE, connection; and
a network connection established in the single connection mode is the LTE connection or an NR connection in a standalone (SA) mode.

11. The method according to any one of claims 1-9, wherein the target hardware resource includes a transmitter resource and/or a receiver resource.

12. The method according to any one of claims 1-9, wherein after the responding to a service of the second SIM card by means of the target hardware resource, and responding to a service of the first SIM card by means of the remaining hardware resources, the method further comprises:
in response to ending of the service of the second SIM card, reallocating the target hardware resource to the first SIM card.

13. A service response apparatus, applied to a terminal provided with at least two SIM cards, the at least two SIM cards comprising a first SIM card and a second SIM card, and the service response apparatus comprising:
a releasing and allocating module, configured to: in response to the second SIM card having a service need, release a target hardware resource occupied by the first SIM card and allocate the target hardware resource to the second SIM card, where after the target hardware resource is released, at least one network connection between the first SIM card and at least one network device is kept connected; and
a service response module, configured to respond to a service of the second SIM card by means of the target hardware resource, and respond to a service of the first SIM card by means of the remaining hardware resources.

14. The apparatus according to claim 13, wherein a working mode of the first SIM card is a dual connection mode, and a working mode of the second SIM card is a single connection mode; or,
the working mode of the first SIM card is the dual connection mode, and the working mode of the second SIM card is the dual connection mode; or,
the working mode of the first SIM card is the single connection mode, and the working mode of the second SIM card is the single connection mode.

15. The apparatus according to claim 14, wherein the working mode of the first SIM card is the dual connection mode, a first network connection is established between the first SIM card and a first network device, a second network connection is established between the first SIM card and a second network device, the working mode of the second SIM card is the single connection mode, and a third network connection is established between the second SIM card and a third network device;
the releasing and allocating module comprises:
a first releasing and allocating unit, configured to release the target hardware resource occupied by the first network connection and allocate the target hardware resource to the third network connection of the second SIM card; or,
a second releasing and allocating unit, configured to release the target hardware resource occupied by the second network connection and allocate the target hardware resource to the third network connection of the second SIM card.

16. The apparatus according to claim 15, wherein the first releasing and allocating unit is configured to:
release the target hardware resource occupied by the first network connection in a first release mode and allocate the target hardware resource to the third network connection of the second SIM card, wherein the target hardware resource is time-multiplexed by the first SIM card and the second SIM card in the first release mode; or,
release the target hardware resource occupied by the first network connection in a second release mode and allocate target hardware resource to the third network connection of the second SIM card, wherein the target hardware resource is monopolized by the second SIM card in the second release mode;
the second releasing and allocating unit is configured to:
release the target hardware resource occupied by the second network connection in the first release mode and allocate target hardware resource to the third network connection of the second SIM card, wherein the target hardware resource is time-multiplexed by the first SIM card and the second SIM card in the first release mode; or,
release the target hardware resource occupied by the second network connection in the second release mode and allocate the target hardware resource to the third network connection of the second SIM card, wherein the target hardware resource is monopolized by the second SIM card in the second release mode.

17. The apparatus according to claim 14, wherein the working mode of the first SIM card is the dual connection mode, a first network connection is established between the first SIM card and a first network device, a second network connection is established between the first SIM card and a second network device, the working mode of the second SIM card is the dual connection mode, a third network connection is established between the second SIM card and a third network device, and a fourth network connection is established between the second SIM card and a fourth network device;
the releasing and allocating module comprises:
a third releasing and allocating unit, configured to release the target hardware resource occupied by the first network connection and the second network connection, and allocate target hardware resource to the third network connection and the fourth network connection of the second SIM card, wherein after the target hardware resource is released, at least one of the first network connection and the second network connection is kept connected.

18. The apparatus according to claim 17, wherein the third releasing and allocating unit is configured to:
release the target hardware resource occupied by the first network connection and the second network connection in a first release mode and allocate the target hardware resource to the third network connection and the fourth network connection of the second SIM card, wherein the target hardware resource is time-multiplexed by the first SIM card and the second SIM card in the first release mode; or,
release a first target hardware resource occupied by the first network connection in the first release mode, release a second target hardware resource occupied by the second network connection in a second release mode, and allocate the first target hardware resource and the second target hardware resource to the third network connection and the fourth network connection of the second SIM card, wherein the first target hardware resource is time-multiplexed by the first SIM card and the second SIM card in the first release mode, and the second target hardware resource is monopolized by the second SIM card in the second release mode; or,
release the second target hardware resource occupied by the second network connection in the first release mode, release the first target hardware resource occupied by the first network connection in the second release mode, and allocate the first target hardware resource and the second target hardware resource to the third network connection and the fourth network connection of the second SIM card, wherein the second target hardware resource is time-multiplexed by the first SIM card and the second SIM card in the first release mode, and the first target hardware resource is monopolized by the second SIM card in the second release mode.

19. The apparatus according to claim 18, wherein during releasing the target hardware resource occupied by the first network connection and the second network connection in a first release mode, release durations of hardware resources occupied by the first network connection and the second network connection are staggered.

20. The apparatus according to claim 14, wherein the working mode of the first SIM card is the single connection mode, a first network connection is established between the first SIM card and a first network device, the working mode of the second SIM card is the single connection mode, and a second network connection is established between the second SIM card and a second network device;
the releasing and allocating module comprises:
a fourth releasing and allocating unit, configured to release the target hardware resource occupied by the first network connection and allocate the target hardware resource to the second network connection of the second SIM card, wherein after the hardware resource is released, the first network connection is kept connected.

21. The apparatus according to claim 20, wherein the fourth releasing and allocating unit is configured to:
release the target hardware resource occupied by the first network connection in a first release mode and allocate the target hardware resource to the second network connection of the second SIM card, wherein the target hardware resource is time-multiplexed by the first SIM card and the second SIM card in the first release mode.

22. The apparatus according to any one of claims 14 to 21, wherein network connections established in the dual connection mode includes a NR connection in a NSA mode, and an LTE connection; and
a network connection established in the single connection mode is the LTE connection or an NR connection in an SA mode.

23. The apparatus according to any one of claims 13 to 21, wherein the target hardware resource includes a transmitter resource and/or a receiver resource.

24. The apparatus according to any one of claims 13 to 21, the releasing and allocating module is further configured to :
in response to ending of the service of the second SIM card, reallocating the target hardware resource to the first SIM card.

25. A terminal, provided with at least two SIM cards, the at least two SIM cards comprising a first SIM card and a second SIM card, the terminal comprising:
a processor;
a receiver and a transmitter connected to the processor; and
a memory stored with executable instructions capable of being executed by the processor;
wherein the processor is configured to load and execute the executable instructions to implement the service response method according to any one of claims 1-12.

26. A computer-readable storage medium stored with at least one instruction, wherein the at least one instruction is configured to be executed by a processor to implement the service response method according to any one of claims 1-12.

27. A computer program product or computer program, comprising computer instructions stored in a computer-readable storage medium from which a processor reads and executes the computer instructions to implement the service response method according to any one of claims 1-12.
